# EUROPÄISCHE PATENTSCHRIFT

(11) **EP 1 379 832 B1**
(45) Veröffentlichungstag und Bekanntmachung des Hinweises auf die Patenterteilung: **23.11.2005**
(21) Anmeldenummer: 02740438.3
(22) Anmeldetag: 28.03.2002
(51) Int. Cl.: G01B 3/00, G01B 3/22, G01B 11/00

(54) **LÄNGENMESSTASTER**
LENGTH SENSOR
PALPEUR DE MESURE DE LONGUEUR

(30) Priorität: 11.04.2001 DE 10118069
(43) Veröffentlichungstag der Anmeldung: 14.01.2004
(73) Patentinhaber: Dr. Johannes Heidenhain GmbH, 83292 Traunreut (DE)
(72) Erfinder: HERKT, Peter, 83371 Stein a.d. Traun (DE); BÖGE, Ludwig, 07751 Jenapriessnitz (DE)
(86) Internationale Anmeldenummer: PCT/EP2002/003478
(87) Internationale Veröffentlichungsnummer: WO 2002/084208

(56) Entgegenhaltungen:
- DE-A- 2 948 712
- DE-A- 3 719 509
- DE-A- 4 033 924
- US-A- 5 072 174
- US-A- 5 414 940

## Beschreibung

Die Erfindung betrifft einen Längenmesstaster gemäß dem Oberbegriff des Patentanspruches 1.

Derartige Längenmesstaster werden zum Vermessen von Werkstücken in der Fertigungstechnik eingesetzt. Es können beispielsweise Dicken, Breiten, Längen, Tiefen sowie Innen- oder Außendurchmesser ermittelt werden.

In der US 5,072,174 ist ein Längenmesstaster mit den Merkmalen des Oberbegriffs des Patentanspruches beschrieben. Ein Taststift ist mittels eines Führungselementes in Form einer Kugelführung in Längsrichtung in einem Grundkörper verschiebbar gelagert. Der zum Antasten eines zu messenden Werkstückes erforderliche Kontaktdruck wird durch eine Schraubenfeder erzeugt, die mit einem Ende am Taststift und mit dem anderen Ende am Grundkörper festgelegt ist.

Die Länge der Schraubenfeder muss zumindest dem Hub des Taststiftes entsprechen, lange Schraubenfedern neigen aber zum seitlichen Ausknicken. Je größer der gewünschte Hub des Taststiftes ist, desto länger muss auch die Kugelführung ausgeführt sein, um die bei einer Antastung durch den Taststift eingeleiteten Querkräfte aufgrund der Hebelwirkung aufnehmen zu können. Längenmesstaster mit relativ großem Messbereich - also Hub des Taststiftes - bauen dadurch relativ lang.

Zur Verkürzung der Baulänge eines Längenmesstasters wurden gemäß der US 4,347,492 zwei voneinander beabstandete Kugelführungen vorgesehen. Zwischen diesen beiden Kugelführungen ist eine Erfassungseinrichtung zur Erfassung der Position des Taststiftes angeordnet. Die Schraubenfeder befindet sich in einer Bohrung des Taststiftes, was einen relativ dicken Taststift bedingt. Bei gefordertem großen Hub des Taststiftes und der Verwendung einer langen Schraubenfeder besteht auch hier das Problem des Ausknickens, was eine Reibung zwischen der Schraubenfeder und dem Taststift verursacht.

Aufgabe der Erfindung ist es, einen Längenmesstaster zu schaffen, der auch bei einem relativ großen möglichen Hub des Taststiftes kompakt und stabil aufgebaut ist bzw. bei dem das Führungselement den Messvorgang nicht nachteilig beeinflusst.

Diese Aufgabe wird durch die Merkmale des Patentanspruches 1 gelöst.

Die Vorteile der Erfindung liegen darin, dass die Schraubenfedern platzsparend angeordnet sind und der Taststift über den gesamten Hub querkraftstabil gelagert ist. Durch die Aufteilung einer langen Schraubenfeder in mehrere kurze Schraubenfedern mit dazwischen angeordneten Führungselementen wird ein Ausknicken der Schraubenfedern vermieden. Es besteht nun die Möglichkeit Schraubenfedem einzusetzen, die eine geringe Druck- oder Zugkraft F erzeugen und trotz ihrer dünnen Windungen und somit geringen Federkonstante nicht ausknicken. Dadurch wird eine störende, die Lebensdauer und die Messgenaugkeit beeinflussende Reibung zwischen dem Taststift und den Windungen der Schraubenfedem vermieden. Die Anordnung kann jetzt auch so gewählt werden, dass der am Taststift befestigte Maßstab im Messbetrieb in Windungen zumindest einer der Schraubenfedern eintaucht.

Ein weiterer Vorteil, der durch die Erfindung erzielt wird, ist die definierte Bewegung des Führungselementes. Die Schraubenfedern halten das Führungselement immer definiert zwischen den Federn, bei gleichen Federeigenschaften aufgrund des Kräftegleichgewichtes in der Mitte zwischen den Federn.

Vorteilhafte Ausgestaltungen der Erfindung sind in den abhängigen Patentansprüchen angegeben.

Ausführungsbeispiele sind in der nachfolgenden Beschreibung in Verbindung mit den Zeichnungen näher erläutert:

Es zeigt
- Figur 1: einen Schnitt eines Längenmesstasters in einer ausgefahrenen Endposition des Taststifts;
- Figur 2: den Längenmesstaster gemäß Figur 1 in einer Antastposition;
- Figur 3: einen Auschnitt eines Längenmesstasters mit einer daran festgelegten Zugfeder und
- Figur 4: einen Schnitt eines weiteren Längenmesstasters.

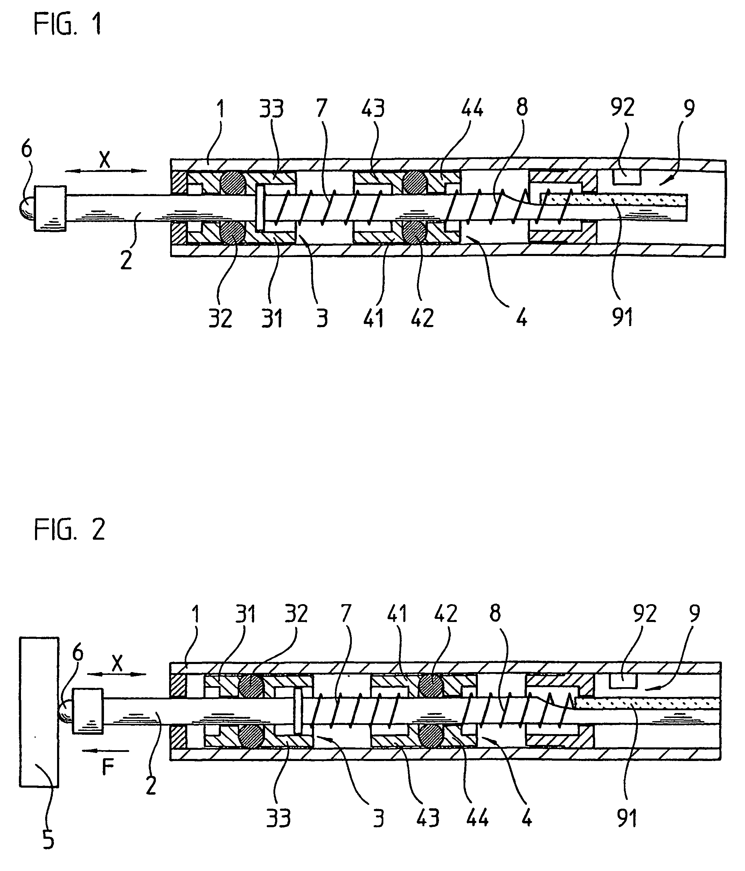

Anhand der Figuren 1 und 2 wird nachfolgend ein Ausführungsbeispiel eines erfindungsgemäß ausgebildeten Längenmesstasters beschrieben. Die Figuren zeigen schematisch einen Querschnitt des gesamten Längenmesstasters bestehend aus einem Grundkörper 1, in dem ein stangenförmiger Taststift 2 in Messrichtung X verschiebbar gelagert ist.

Zur Antastung eines in Figur 2 dargestellten Werkstücks 5 ist das Ende des Taststiftes 2 kugelig als Antastelement 6 ausgebildet. Bei einem Antastvorgang wird der Taststift 2 mit seinem Antastelement 6 auf die zu messende Oberfläche des Werkstücks 5 mit einer Kraft F gedrängt Diese Kraft F wird durch Schraubenfedem 7 und 8 erzeugt, die in Messrichtung X hintereinander angeordnet sind und das Antastelement 6 auf das Werkstück 5 drängen. Zum platzsparenden Aufbau verlaufen die Wicklungen der Schraubenfedern 7, 8 um den Umfang des runden Taststiftes 2. Um bei Antastbewegungen des Taststiftes 2 eine Reibung zwischen dem Taststift 2 und den Schraubenfedem 7, 8 zu vermeiden, ist über den Umfang ein Freiraum zwischen dem Taststift 2 und den Windungen der Schraubenfedern 7, 8 vorgesehen.

Zur Messung der linearen Verschiebung des Taststiftes 2 gegenüber dem Grundkörper 1 ist eine Erfassungseinrichtung 9 vorgesehen. Sie besteht in bekannter Weise aus einem Maßstab 91 und einer Abtasteinheit 92 zur Abtastung der Messteilung des Maßstabes 91. Der Maßstab 91 ist am Taststift 2 und die Abtasteinheit 92 gegenüberliegend am Grundkörper 1 befestigt Von der Abtasteinheit 92 werden positionsabhängige elektrische Signale erzeugt, die einer Anzeigeeinheit oder einer Auswerteeinheit zugeführt werden. Die Messteilung des Maßstabes 91 kann lichtelektrisch, kapazitiv, magnetisch oder induktiv abtastbar ausgebildet sein. Zum besonders platzsparenden Aufbau ist der Maßstab 91 derart dimensioniert, dass er bei Hubbewegungen des Taststiftes 2 in die Windungen der Schraubenfeder 8 eintauchen kann. Hierzu ist der axiale Abstand zwischen der stationären Abtasteinheit 92 und dem hinteren Ende der Schraubenfeder 8 geringer als der mögliche Hub des Taststiftes 2 bzw. als der Messbereich der Erfassungseinrichtung 9.

Die Führung des Taststiftes 2 in dem Grundkörper 1 erfolgt mittels mehrerer in Messrichtung X voneinander beabstandet angeordneter Führungselemente, die insbesondere als Kugelführungen 3 und 4 ausgebildet sind. Eine dieser Kugelführungen 3 ist am antastseitigen Ende des Grundkörpers 1 angeordnet. Um die bei der Antastung durch den Taststift 2 eingeleiteten Querkräfte gut aufnehmen zu können ist davon beabstandet zumindest eine weitere Kugelführung 4 angeordnet. Zum besonders platzsparenden Aufbau ist diese weitere Kugelführung 4 zwischen den beiden Schraubenfedern 7 und 8 angeordnet. Dabei stützt sich die erste Schraubenfeder 7 mit einem Ende an dem Taststift 2 ab und mit dem anderen Ende an der Kugelführung 4. An der gegenüberliegenden Seite dieser Kugelführung 4 stützt sich ebenso ein Ende der zweiten Schraubenfeder 8 ab, wobei sich das andere Ende dieser Schraubenfeder 8 an dem Grundkörper 1 abstützt.

Jede der Kugelführungen 3 und 4 besteht aus einem Kugelkäfig 31 und 41 mit darin drehbar gelagerten Kugeln 32 und 42, die einerseits an der Innenfläche des Grundkörpers 1 und andererseits an der Oberfläche des Taststiftes abrollen. Da die Schraubenfedem 7 und 8 Druckfedern sind, sind diese an den Kugelkäfigen 31 und 41 festgelegt, indem sie sich an den Kugelkäfigen 31, 41 axial in Messrichtung X abstützen. Im Abstützbereich weisen die Kugelkäfige 31, 41 einen topfförmigen Abschnitt 33, 43, 44 auf, welcher die Schraubenfedem 7, 8 umgreift.

Die Kugelführung 4 ist zwischen den beiden Schraubenfedem 7 und 8 axial eingespannt und relativ zum Taststift 2 sowie zum Grundkörper 1 in Messrichtung X beweglich aber quer dazu spielfrei am Taststift 2 und am Grundkörper 1 gelagert. Bei Hubbewegungen des Taststiftes 2 in Messrichtung X passt sich die Lage der Kugelführung 4 der Lage der Schraubenfedem 7, 8 an, sie befindet sich immer in der Mittellage zwischen den beiden Schraubenfedem 7, 8, wenn diese gleiche Federkonstanten haben.

Die in den Figuren 1 und 2 gezeigte Anordnung hat den Vorteil, dass relativ kurze Kugelführungen 3, 4 ausreichen um Querkräfte des Taststiftes 2 gut abzustützen. Durch die Kugelführung 4 zwischen den zwei Schraubenfedem 7 und 8 wird im Vergleich zu einer einzigen langen Schraubenfeder ein Ausknicken der Schraubenfedern 7, 8 verhindert, da ihre Enden durch die Kugelführung 4 gut geführt werden.

Besonders vorteilhaft ist es, wenn der Grundkörper 1 über den gesamten Bereich aller Kugelführungen 3 und 4 einstückig ausgebildet ist um Fluchtungsfehler der Führungsflächen an dem Grundkörper 1 auszuschließen.

Anstelle der Kugelführungen 3 und 4 können auch andere Führungselemente, beispielsweise Gleitlager eingesetzt werden. Dabei könnte auch die antastseitige Kugelführung 3 durch ein an dem Grundkörper 1 fixiertes Gleitlager oder durch eine am Grundkörper 1 fixierte Kugelumlaufführung ersetzt werden. Wird dagegen die Kugelführung 4 durch ein Gleitlager ersetzt, muss dieses eine äußere Gleitfläche zwischen dem Lagerkörper und dem Grundkörper 1 sowie eine innere Gleitfläche zwischen dem Lagerkörper und dem Taststift 2 aufweisen, um die freie Beweglichkeit des Lagerkörpers gegenüber dem Grundkörper 1 sowie dem Taststift 2 in axialer Richtung X sowie Spielfreiheit quer dazu zu erreichen.

Das zwischen den beiden Schraubenfedern 7, 8 eingespannte Führungselement in Form einer Kugelführung 4 oder eines Lagerkörpers eines Gleitlagers folgt der Hubbewegung des Taststiftes 2, indem es sich der Lage der Schraubenfedern 7, 8 anpasst. Bei der Verwendung von zwei Schraubenfedem 7, 8 wird jede Schraubenfeder 7, 8 um die Hälfte der Hubbewegung des Taststiftes 2 zusammengedrückt. Zusätzlich zu den zwei Schraubenfedem 7, 8 können auch noch weitere Schraubenfedern hintereinander angeordnet werden, wobei vorteilhafterweise jeweils zwischen zwei dieser Schraubenfedem in gezeigter Weise ein Führungselement, insbesondere eine Kugelführung 4 angeordnet wird.

Wird die Kugelführung 4 zwischen den zwei Schraubenfedem 7, 8 entsprechend querkraftstabil ausgeführt, kann der Taststift 2 auch ausschließlich durch diese Kugelführung 4 geführt werden und die antastseitige Kugelführung 3 entfallen, wie später noch anhand eines Beispiels näher erläutert wird.

Zur Automatisierung des Antastvorganges kann am Längenmesstaster ein Luftdruck-Anschluss zur Erzeugung einer Kraft vorgesehen sein, die entgegen der Antastkraft F der Druckfedern 7, 8 wirkt und den Taststift 2 vom Werkstück 5 abhebt.

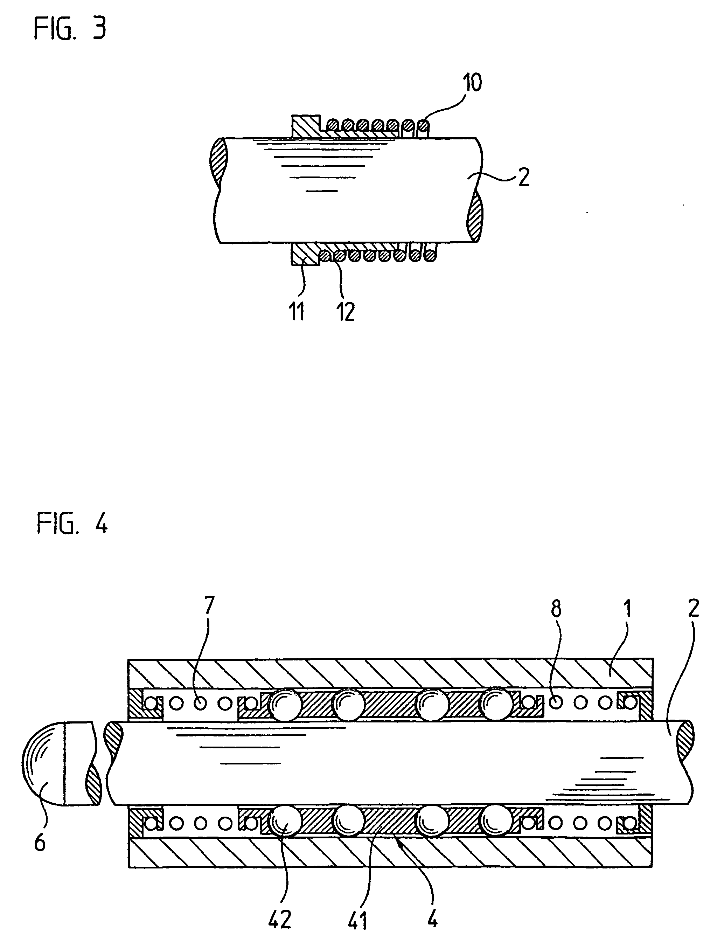

Anstelle von Druckfedern können die Schraubenfedern 7, 8 auch als Zugfedern ausgebildet sein. Durch die Zugfedern befindet sich der Taststift 2 in seiner Ruhelage im eingefahrenen Zustand. Die Antastkraft F wird pneumatisch mittels Druckluft in bekannter Weise erzeugt, indem die Druckluft in den Innenraum des Längenmesstasters geleitet wird und dadurch eine Linearbewegung des Taststiftes 2 eingeleitet wird. Soll die Antastung automatisiert beendet werden, wird die Druckluft abgeschaltet, was zur Folge hat, dass der Taststift 2 durch die Zugfedern vom Werkstück 5 abhebt und zurück in seine Ruhelage einfährt. Bei der Verwendung von Zugfedern anstelle von Druckfedern 7, 8 sind die Enden der Zugfedern an dem Taststift 2, dem Grundkörper 1 und den Führungselementen 3, 4 durch Fixierung festgelegt. Diese Fixierung kann durch Kleben, Schweißen oder Formschluss erfolgen. Ein Formschluss ist besonders vorteilhaft, ein Beispiel hierzu ist in Figur 3 dargestellt. Figur 3 zeigt die Festlegung eines Endes einer schraubenförmigen Zugfeder 10 am Taststift 2. Zur Festlegung ist eine Hülse 11 auf den Umfang des Taststiftes 2 aufgepresst. Diese Hülse 11 weist einen über einen Teil des Umfanges verlaufenden Bund 12 auf, unter den das Ende der Zugfeder 10 eingedreht ist. Der Bund 12 kann eben verlaufen, also durch einen Einstich in die Hülse 11 hergestellt sein, oder der Bund 12 kann auch schraubenförmig am Umfang der Hülse 11 mit einer Steigung in Längsrichtung X verlaufen.

Figur 4 zeigt ein weiteres Ausführungsbeispiel eines Längenmesstasters. Im Unterschied zu der Ausführung gemäß den Figuren 1 und 2 ist hier keine antastseitige Kugelführung 3 vorgesehen. Der Taststift 2 wird durch die beiden Schraubenfedem 7 und 8 vorgespannt, bzw. in einer Ruhelage gehalten und bei einer Antastbewegung vorgespannt. Zwischen den beiden Schraubenfedern 7, 8 ist die Kugelführung 4 angeordnet, an der sich die ihr zugeordneten Enden der Schraubenfedem 7, 8 abstützen (bei Druckfedem) oder -wie dargestellt- bei Verwendung von Zugfedern daran durch Befestigung festgelegt sind. Zu dieser Befestigung können Endbereiche des Kugelkäfigs 41 jeweils einen in Figur 3 bezeichneten Bund 12 zum formschlüssigen Einhaken der Schraubenfedem 7, 8 aufweisen. Eine der Schraubenfedem 7 stützt sich weiterhin am Grundkörper 1 ab und die andere Schraubenfeder 8 am Taststift 2. Die beiden Schraubenfedern 7, 8 haben vorteilhafterweise gleiche Federeigenschaften, so dass bei jeder Stellung des Taststiftes 2 gegenüber dem Grundkörper 1 sich die Kugelführung 4 mittig zwischen der Abstützstelle am Grundkörper 1 und der Abstützstelle am Taststift 2 befindet.

Bei allen Ausführungen wird eine bleibende Verlagerung der Kugelführung 4, verursacht durch Beschleunigungen, Stöße oder Führungsungenauigkeiten vermieden. Die beiden Schraubenfedem 7, 8, ausgeführt als Druck- oder Zugfedern, gewährleisten, dass jede unerwünschte Verlagerung der Kugelführung 4 in Messrichtung X durch Rückstellkräfte der Schraubenfedem 7, 8 kompensiert wird. Die Betriebsfähigkeit des Längenmesstasters ist dadurch gewährleistet, da die Kugelführung 4 sich zu keinem Endanschlag verlagern kann und dadurch eine Bremsung der Taststiftbewegung verursachen kann.

## Patentansprüche

1. Längenmesstaster mit
- einem Taststift (2) mit einem Antastelement (6) zum Antasten eines Messobjektes (5), der mittels zumindest eines Führungselementes (4) relativ zu einem Grundkörper (1) in Messrichtung X entgegen einer Federkraft F verschiebbar gelagert ist;
- einer Erfassungseinrichtung (9) zur Erfassung der Position des Taststiftes (2) gegenüber dem Grundkörper (1), **dadurch gekennzeichnet, dass**
- der Taststift (2) über mehrere in Messrichtung X hintereinander angeordnete Federelemente (7, 8) vorgespannt ist;
- zwischen jeweils zwei Federelementen (7, 8) ein Führungselement (4) angeordnet ist, an dem die ihm zugewandten Endbereiche dieser zwei Federelemente (7, 8) festgelegt sind, wobei das Führungselement (4) am Taststift (2) und am Grundkörper (1) in Messrichtung X verschiebbar gelagert ist.

2. Längenmesstaster nach Anspruch 1, **dadurch gekennzeichnet, dass** der Taststift (2) über zwei Federelemente (7, 8) vorgespannt ist, wobei ein Endbereich eines der Federelemente (7) am Taststift (2) festgelegt ist und der andere Endbereich dieses Federelementes (7) an dem Führungselement (4) festgelegt ist und ein Endbereich des weiteren Federelementes (8) am Führungselement (4) und der andere Endbereich dieses Federelementes (8) am Grundkörper (1) festgelegt ist.

3. Längenmesstaster nach einem der vorhergehenden Ansprüche, **dadurch gekennzeichnet, dass** das Führungselement eine Kugelführung (4) ist.

4. Längenmesstaster nach Anspruch 3, **dadurch gekennzeichnet, dass** die Kugelführung (4) aus einem Kugelkäfig (41) und darin drehbar gelagerten Kugeln (42) besteht, und dass die Endbereiche der Federelemente (7, 8) an dem Kugelkäfig (41) der Kugelführung (4) festgelegt sind.

5. Längenmesstaster nach einem der vorhergehenden Ansprüche, **dadurch gekennzeichnet, dass** der Taststift (2) über zumindest ein weiteres Führungselement (3) am Grundkörper (1) in Messrichtung (X) verschiebbar gelagert ist, an dem keines der Federelemente (7, 8) festgelegt ist.

6. Längenmesstaster nach Anspruch 5, **dadurch gekennzeichnet, dass** das weitere Führungselement eine Kugelführung (3) zwischen dem Taststift (2) und dem Grundkörper (1) ist.

7. Längenmesstaster nach Anspruch 5, **dadurch gekennzeichnet, dass** das weitere Führungselement (3) starr am Grundkörper (1) fixiert ist.

8. Längenmesstaster nach einem der vorhergehenden Ansprüche, **dadurch gekennzeichnet, dass** die Federelemente Schraubenfedem in Form von Druckfedern (7, 8) sind.

9. Längenmesstaster nach einem der vorhergehenden Ansprüche 1 bis 7, **dadurch gekennzeichnet, dass** die Federelemente Schraubenfedern in Form von Zugfedern (10) sind.

10. Längenmesstaster nach einem der vorhergehenden Ansprüche, **dadurch gekennzeichnet, dass** die Federelemente (7, 8) gleiche Federeigenschaften aufweisen, so dass das Führungselement (4) zentrisch zwischen den Federelementen (7, 8) gehalten wird.

## Claims

1. Length measuring probe having
- a probe pin (2) with a touch scanning element (6) for touch scanning a measuring object (5), which is mounted by means of at least one guide element (4) so as to be displaceable relative to a base body (1) in the measuring direction X against a spring force F,
- a detection device (9) for detecting the position of the probe pin (2) relative to the base body (1), **characterised in that**
- the probe pin (2) is pre-stressed by a plurality of spring elements (7, 8) arranged the one behind the other in the measuring direction X,
- between each two spring elements (7, 8) is arranged a guide element (4) on which the facing end areas of these two spring elements (7, 8) are fixed in place, the guide element (4) being mounted on the probe pin (2) and the base body (1) so as to be displaceable in the measuring direction X.

2. Length measuring probe according to claim 1, **characterised in that** the probe pin (2) is pre-stressed by means of two spring elements (7, 8), an end area of one of the spring elements (7) being fixed in place on the probe pin (2) and the other end area of this spring element (7) being fixed in place on the guide element (4), and an end area of the further spring element (8) being fixed in place on the guide element (4) and the other end area of this spring element (8) being fixed in place on the base body (1).

3. Length measuring probe according to one of the preceding claims, **characterised in that** the guide element is a ball bearing guide (4).

4. Length measuring probe according to claim 3, **characterised in that** the ball bearing guide (4) comprises a ball bearing cage (41) and balls (42) rotatably mounted therein, and **in that** the end areas of the spring elements (7, 8) are fixed in place on the ball bearing cage (41) of the ball bearing guide (4).

5. Length measuring probe according to one of the preceding claims, **characterised in that** the probe pin (2) is mounted by means of at least one further guide element (3), so as to be displaceable in the measuring direction X, on the base body (1) on which none of the spring elements (7, 8) have been fixed in place.

6. Length measuring probe according to claim 5, **characterised in that** the further guide element is a ball bearing guide (3) between the probe pin (2) and the base body (1).

7. Length measuring probe according to claim 5, **characterised in that** the further guide element (3) is rigidly fixed in place on the base body (1).

8. Length measuring probe according to one of the preceding claims, **characterised in that** the spring elements are helical springs in the form of compression springs (7, 8).

9. Length measuring probe according to one of the preceding claims 1 to 7, **characterised in that** the spring elements are helical springs in the form of tension springs (10).

10. Length measuring probe according to one of the preceding claims, **characterised in that** the spring elements (7, 8) have the same spring properties, such that the guide element (4) is held centred between the spring elements (7, 8).

## Revendications

1. Palpeur de mesure de longueur comprenant
- une tige de palpeur (2) avec un élément de touche (6) pour palper un objet à mesurer (5), laquelle tige est montée mobile par rapport à un corps de base (1) à l'aide d'un élément de guidage (4), au nombre d'au moins un, de manière à pouvoir être déplacée dans la direction de mesure X, à l'encontre d'une force élastique F;
- un dispositif de détection (9) pour détecter la position de la tige de palpeur (2) par rapport au corps de base (1), **caractérisé en ce que**
- la tige de palpeur (2) est mise sous précontrainte par plusieurs éléments élastiques (7, 8) disposés les uns derrière les autres dans la direction de mesure X;
- entre deux éléments élastiques (7, 8) il est prévu chaque fois un élément de guidage (4) auquel sont fixées les extrémités, tournées vers lui, de ces deux éléments élastiques (7, 8), l'élément de guidage (4) étant monté sur la tige de palpage (2) et sur le corps de base (1), avec possibilité de translation dans la direction de mesure X.

2. Palpeur de mesure de longueur selon la revendication 1, **caractérisé en ce que** la tige de palpeur (2) est mise sous précontrainte par deux éléments élastiques (7, 8), une extrémité de l'un (7) des éléments élastiques étant fixée à la tige de palpeur (2) et l'autre extrémité de cet élément élastique (7) étant fixée à l'élément de guidage (4), et une extrémité de l'autre élément élastique (8) étant fixée à l'élément de guidage (4) et l'autre extrémité de cet élément élastique (8) étant fixée au corps de base (1).

3. Palpeur de mesure de longueur selon une des revendications précédentes, **caractérisé en ce que** l'élément de guidage est un guide à billes (4).

4. Palpeur de mesure de longueur selon la revendication 3, **caractérisé en ce que** le guide à billes (4) est constitué d'une cage à billes (41) et de billes (42) montées tournantes dans celle-ci, et **en ce que** les extrémités des éléments élastiques (7, 8) sont fixées à la cage à billes (41) du guide à billes (4).

5. Palpeur de mesure de longueur selon une des revendications précédentes, **caractérisé en ce que** la tige de palpeur (2) est montée sur le corps de base (1) avec possibilité de déplacement en translation dans la direction de mesure (X), par l'intermédiaire d'au moins un élément de guidage supplémentaire (3) auquel n'est fixé aucun des éléments élastiques (7, 8).

6. Palpeur de mesure de longueur selon la revendication 5, **caractérisé en ce que** l'élément de guidage supplémentaire est un guide à billes (3) entre la tige de palpeur (2) et le corps de base (1).

7. Palpeur de mesure de longueur selon la revendication 5, **caractérisé en ce que** l'élément de guidage supplémentaire (3) est fixé rigidement au corps de base (1).

8. Palpeur de mesure de longueur selon une des revendications précédentes, **caractérisé en ce que** les éléments élastiques sont des ressorts hélicoïdaux sous forme de ressorts de compression (7, 8).

9. Palpeur de mesure de longueur selon une des revendications précédentes, **caractérisé en ce que** les éléments élastiques sont des ressorts hélicoïdaux sous forme de ressorts de traction (10).

10. Palpeur de mesure de longueur selon une des revendications précédentes, **caractérisé en ce que** les éléments élastiques (7, 8) présentent les mêmes propriétés élastiques, de sorte que l'élément de guidage (4) est maintenu centré entre les éléments élastiques (7, 8).
